# EUROPÄISCHE PATENTSCHRIFT

(11) **EP 2 137 447 B1**
(45) Veröffentlichungstag und Bekanntmachung des Hinweises auf die Patenterteilung: **29.06.2011**
(21) Anmeldenummer: 08734793.6
(22) Anmeldetag: 27.03.2008
(51) Int. Cl.: F16L 37/23

(54) **KURZBAUENDER STECKER FÜR FLUIDKUPPLUNGEN**
SHORT-BODY CONNECTOR FOR FLUID COUPLINGS
FICHE DE CONSTRUCTION COURTE POUR COUPLAGES HYDRAULIQUES

(30) Priorität: 13.04.2007 DE 102007017910
(43) Veröffentlichungstag der Anmeldung: 30.12.2009
(73) Patentinhaber: TEMA Marketing AG, 6300 Zug (CH)
(72) Erfinder: SIMON, Horst, 51643 Gummersbach (DE); WITT, Stefan, 71735 Eberdingen (DE)
(74) Vertreter: Müller, Karl-Ernst
(86) Internationale Anmeldenummer: PCT/EP2008/002396
(87) Internationale Veröffentlichungsnummer: WO 2008/125188

(56) Entgegenhaltungen:
- EP-A- 1 729 051
- GB-A- 813 194
- US-A- 2 854 259
- US-A- 3 334 860
- US-A- 3 704 002

## Beschreibung

Lösbare Fluidkupplungen werden dazu verwendet, Fluidleitungen zu verbinden. Zu der Fluidkupplung gehört ein Buchsenteil und ein Stecker, der in die Öffnung des Buchsenteils einsteckbar ist. Innerhalb des Buchsenteils befinden sich Verriegelungselemente, die den Stecker im Buchsenteil festhalten, damit er durch die hydraulische Kraft des Fluids nicht herausgeschleudert wird. Zusätzlich können im Buchsenteil noch Fangmittel enthalten sein, die den Stecker in einer Zwischenstellung halten, damit gefahrlos das unter Druck stehende Fluid in die Atmosphäre entweichen kann, ohne dass eine Rückstoßkraft auftritt, die den Stecker wegschleudert.

Die hierfür verwendeten Stecker setzen sich aus einem rohrförmigen Mundstück und einem Gewindeteil zusammen. Das Mundstück wird in die Buchse eingeführt, während das Gewindeteil dazu vorgesehen ist, den Stecker an einem Schlauch oder einer Rohrleitung zu befestigen. Der Stecker baut dementsprechend lang, was insbesondere störend ist, wenn der Stecker an einem starren, unbeweglichen Teil, beispielsweise einem Flaschenventil, befestigt ist.

Aus der US-A 3 704 002 ist eine Fluidkupplung mit einem Buchsenteil und einer zugehörigen Steckeranordnung gemäß den gattungsgemäßen Merkmalen bekannt. Die Steckeranordnung umfasst eine mit Innengewinde auf einem Gewindestutzen aufschraubbaren Grundkörper, auf dessen Außenseite eine Verriegelungsnut zum Zusammenwirken mit an dem Buchsenteil beweglich angeordneten Verriegelungskugeln angeordnet ist. Die Steckeranordnung weist schon eine relativ kurze Bauweise dadurch auf, dass die Verriegelungsnut in der axialen Erstreckung des Grundkörpers in Einsteckrichtung unmittelbar vor Beginn des Innengewindes angeordnet ist. Der Grundkörper ist mit einem in ihm angeordneten, vorstehenden Stutzen ais Teil einer Ventilanordnung in eine Aufnahme des Buchsenteils einschiebbar, wobei an der Aufnahme des Buchsenteils Dichtungsmittel zur Abdichtung zwischen Buchse und Steckeranordnung angeordnet sind.

Ausgehend hiervon liegt der Erfindung die Aufgabe zugrunde, eine noch kürzer bauende Steckeranordnung einzurichten.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im einzelnen vor, dass die an dem Grundkörper angeordneten Verriegelungsmittel bezogen auf die axiale Erstreckung des Grundkörpers auf der Höhe des Innengewindes und in radialer Richtung nebeneinander mit dem Innengewinde angeordnet sind. Da somit bei der erfindungsgemäßen Lösung das Innengewinde und die Verriegelungsmittel nicht mehr in axialer Richtung hintereinander, sondern sich gegenseitig übergreifend angeordnet sind, verkürzt sich die erforderliche Baulänge des Steckers. Weiterhin ist nunmehr an dem Grundkörper ein Dichtungsmittel zum Abdichten gegen die Buchse tragendes Einsatzstück vorgesehen, welches in die Bauform des Grundkörpers integriert ist.

Da die Steckeranordnung so ausgebildet ist, dass die Dichtungsmittel zum Abdichten gegen die Buchse in dem Einsatzstück ausgebildet sind, braucht die Verbindung zwischen dem Einsatzstück und dem Grundkörper nicht fluiddicht zu sein.

Nach einem Ausführungsbeispiel werden günstige Montageverhältnisse erreicht, wenn das Einsatzstück mit einer Dichtfläche zum Abdichten gegen den Gewindestutzen versehen ist, auf dem die Steckeranordnung aufgeschraubt wird. Dadurch ist es möglich, auch tief sitzende Dichtfläche des Gewindestutzens zu erreichen, wie dies gelegentlich bei Ventilen von Druckgasflaschen anzutreffen ist.

Die Dichtfläche kann kugelkalottenförmig gestaltet sein, was die Möglichkeit einer metallischen Dichtung eröffnet. Zur einfachen Verbindung des Einsatzstücks mit dem Grundkörper kann das Einsatzstück einen radial vorstehenden Flansch oder Bund tragen; der mit einer entsprechenden Schulterfläche in der Bohrung des Grundkörpers zusammenwirkt. Hierzu kann nach einem Ausführungsbeispiel der Erfindung vorgesehen sein, dass der Grundkörper mit einer radial nach innen stehenden Rippe zum Zusammenwirken mit dem Flansch des Einsatzstücks verstehen ist.

Die Montage lässt sich vereinfachen, wenn das Einsatzstück mit einer Sprengringnut versehen ist derart, dass ein darin sitzender Sprengring in Verbindung mit dem radialen Flansch das Einsatzstück in dem Grundkörper in axialer Richtung sichert. Nach dem Festschrauben auf dem Gewindestutzen ist der Sprengring funktionslos.

Nach einem Ausführungsbeispiel der Erfindung ist vorgesehen, dass die Dichtungsmittel zur Abdichtung gegen die Buchse einen O-Ring umfassen, der in einer Außenumfangsnut oder in einer bevorzugten Ausführungsform der Erfindung in einer Innenumfangsnut angeordnet sein kann.

Zumindest der Grundkörper, vorzugsweise der gesamte Stecker können rotationssymmetrisch ausgeführt sein.

Die Verriegelungsmittel auf der Außenseite können als umlaufende Rippe, als umlaufende Nut oder als Kombination aus Nut und Rippe ausgeführt sein. Welche Variante jeweils die günstigere ist, richtet sich nach den sonstigen Anforderungen und den Abmessungen.

Die nachfolgende Figurenbeschreibung erläutert Aspekte zum Verständnis der Erfindung. Weiter nicht beschriebene Details kann der Fachmann in der gewohnten Weise den Zeichnungen entnehmen, die insoweit die Figurenbeschreibung ergänzen. Es ist klar, das eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenfalls vorhandene Detail.

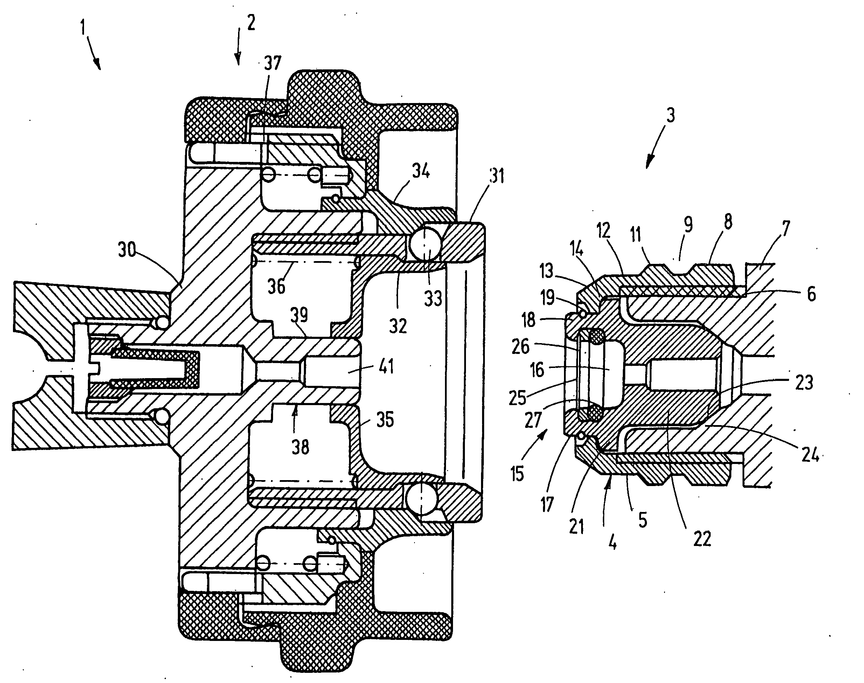

Die einzige Figur zeigt schematisiert im Schnitt eine Buchse und den erfindungsgemäßen Stecker.

Die Figur zeigt eine Fluidkupplungsanordnung 1 im entkuppelten Zustand. Zu der Kupplungsanordnung 1 gehören ein Buchsenteil 2 und ein in den Buchsenteil 2 einsteckbarer erfindungsgemäßer Stecker 3.

Der Stecker 3 weist einen hülsenartigen Grundkörper 4 auf, der mit einem Innengewinde 5 versehen ist. Mit Hilfe des Innengewindes 5 ist der Grundkörper 4 auf ein Außengewinde 6, eines Flaschenventils aufgeschraubt, von dem lediglich der Gewindestutzen 7 zu erkennen ist. Die Außenseite des Grundkörpers 4 ist rotationssymmetrisch und trägt an ihrem hinteren Ende, d.h. an dem von dem Buchsenteil 2 abliegenden Ende einen Sechskant 8 als Werkzeugangriffsfläche. Unmittelbar neben dem Sechskant 8 ist eine Umfangsnut 9 mit trapezförmigem Querschnitt vorhanden, die zum Einsteckende des Steckers 3 hin in eine Rippe 11 übergeht. Im Anschluss an die Rippe 11 ist die Außenumfangsfläche des Grundkörpers 4 zunächst zylindrisch in Gestalt einer Zylinderfläche 12, die an ihrem freien Ende in eine abgeschrägte Fasenfläche 13 übergeht.

Auf Höhe der Fasenfläche 13 steht im Inneren des hülsenförmigen Grundkörpers 4 eine umlaufende Rippe 14 vor.

Wie die Fig. erkennen lässt befinden sich die Rippe 11 und die Nut 9 auf Höhe des Innengewindes 5. Mit anderen Worten die Anschlussmittel für die zu verbindenden Leitung sind gleichsam in das Mundstück des Stecker 2 hinein verschoben. Dadurch entsteht eine sehr kurze Bauform, verglichen mit dem Stand der Technik, bei dem Mundstück und Gewinde hintereinander angeordnet sind.

Im Inneren des Grundkörpers 4 steckt ein Einsatzstück 15. Das Einsatzstück 15 ist ebenfalls rohrförmig und enthält eine Stufenbohrung 16.

Ausgehend vom Einsteckende bildet das Einsatzstück 15 einen zylindrischen Abschnitt 17 mit einer Rille 18 für einen Außensprengring 19. In Anschluss an den zylindrischen Abschnitt 17 bildet das Einsatzstück 15 einen Bund oder Flansch 21, der radial nach außen wegsteht.

Der Bund oder Flansch 21 wirkt, wie gezeigt mit der nach innen ragenden Rippe 14 zusammen.

Anschließend an den Flansch oder Bund 21 geht das Einsatzstück 15 in einen zylindrischen Teil 22 über, der von einem kugelkalottenförmigen Ende 23 abgeschlossen ist.

Wie gezeigt, ragt der zylindrische Teil 22 in die zylindrische Bohrung in dem Schraubanschluss 7 hinein und stößt im montierten Zustand an eine Kegelfläche 24 an. Dort bildet das Einsatzstück mit dem metallischen Schraubanschluss 7 eine Metalldichtung.

In der Stufenbohrung ist im Mündungsbereich eine Ringnut 25 eingestochen, in der ein Ausgleichsring 26 sowie eine O-Ring Dichtung 27 eingesetzt sind.

Da das Buchsenteil 2 nicht Gegenstand der Erfindung ist, genügt es von diesem lediglich jene Teile zu erläutern, die für das Verständnis der Wirkungsweise des Steckers 3 von Bedeutung sind.

Das Buchsenteil 2 weist einen Grundkörper 30 auf, in den eine Grundkörperhülse 31 eingeschraubt ist. Die Grundkörperhülse 31 enthält Radialbohrungen 32 für einen Kranz von Verriegelungskugeln 33. Die Lage der Verriegelungskugeln 33 wird einerseits durch eine äußere Steuerhülse 34 gesteuert, die auf der Außenseite der Grundkörperhülse 31 axial gleitend geführt ist, und andererseits durch eine innere Steuerhülse 35, die im Inneren der Grundkörperhülse 31 ebenfalls axial gleitend geführt ist. Mittels Vorspannfedern 36 und 37 sind die beiden Steuerhülsen 34 und 35 in die in der Figur gezeigte Stellung vorgespannt.

Aus dem Grundkörper 30 ragt ein Mundstück 38 in axialer Richtung vor, das koaxial zu der Bohrung in der Grundköperhülse 31 angeordnet ist. Das Mundstück 38 bildet eine zylindrische Außenumfangsfläche 39, die dazu eingerichtet ist mit dem O-Ring 27 abdichtend zusammen zu wirken. Durch das Mundstück 38 führt eine Fluidbohrung 41 hindurch.

Die Montage des erfindungsgemäßen Steckers 3 geschieht, indem in einem Vormontageschritt zunächst das Einsatzstück 15 von der Rückseite des Grundkörpers 4 her eingeführt wird, bis der Flansch 21 an der inneren Rippe 14 anliegt. Sodann wird der Sprengring 19 in die Sprengringnut 18 eingesetzt, womit das Einsatzstück 15 in dem Grundkörper 4 in axialer Richtung gesichert ist. Der Grundkörper 4 und das Einsatzstück 15 bilden damit eine aus zwei Hauptbestandteilen bestehende Baugruppe, die mit Hilfe des Sprengrings 19 des Flansches 21 und der inneren Rippe 14 unverlierbar aneinander befestigt sind.

Es wird ferner der O-Ring 27 in die Nut 25 eingesetzt und anschließend der Ausgleichsring 26. Seine Aufgabe besteht darin, den effektiven Spalt, den der O-Ring 27 auf dem Mundstück 28 sieht, zu verkleinern. Der Ring 26 sitzt schwimmend in der Nut 25.

Die so erhaltene Einheit wird nunmehr auf dem Gewindestutzen 7 aufgeschraubt und festgezogen. Beim Festziehen legt sich die Kugelkalottenfläche 23 an der Kegelfläche 24 des Gewindestutzens 7 an und bildet eine metallische Dichtung, die auch bei hohen Drücken fluiddicht ist.

Die Montage des Steckers ist damit abgeschlossen. Wie ersichtlich befinden sich die Bauteile, die die Verriegelung des Steckers 3 bewirken, auf der Höhe des Innengewindes 5, bezogen auf die axiale Erstreckung des Steckers 1.

Die so erhaltene Einheit kann nunmehr mit dem Buchsenteil 2 gekuppelt werden, indem der Stecker 3 mit der Konusfläche 13 voraus in den Innenraum der Grundkörperhülse 31 eingeschoben wird. Dabei wird durch die Einschiebebewegung die innere Steuerhülse 35 gegen die Wirkung der Feder 36 zurückgedrückt und gibt das Mundstück 38 frei. Bei der weiteren Einschubbewegung gleitet der O-Ring 27 fluiddicht längs der Außenumfangsfläche 39 des Mundstücks 38. Die Einschubbewegung ist beendet, sobald die Rippe 11 die Verriegelungskugeln 33, die in einem Kranz angeordnet sind, passiert hat und die Verriegelungsnut 9 mit dem Kranz der Verriegelungskugeln 33 fluchtet. Jetzt kann die weitere Feder 37 die äußere Steuerhülse 34 nach vorne in Richtung auf den Stecker 3 vorschieben und durch entsprechende Steuerflächen den Kranz von Verriegelungskugeln 33 in der radial inneren Stellung halten, in der die Kugeln 33 in die Verriegelungnut 9 einrasten. Der Stecker 3 ist damit in axialer Richtung formschlüssig in dem Buchsenteil 2 verriegelt. Gleichzeitig ist die gekuppelte Anordnung fluiddicht, da das Einsatzstück 15 mit Hilfe des O-Rings 27 auf dem Mundstück 38 abdichtet. Es besteht somit eine fluiddichte Verbindung zwischen der Bohrung 41 des Mundstücks 38 mit der Stufenbohrung 16 in dem Einsatzstück 15. Das Einsatzstück 15 ist seinerseits über die Metalldichtung aus den Flächen 23 und 24 abgedichtet in dem Gewindestutzen 7 enthalten.

Der erfindungsgemäße Stecker 3 baut sehr kurz, da sich die Verriegelungsmittel in Gestalt der Rippe 11 und der Nut 9 auf der Höhe des Innengewindes 15 befinden und von diesem nicht, wie beim Stand der Technik, in axialer Richtung beabstandet sind. Das Mundstück des Steckers 1 enthält das Anschlussinnegewinde.

Die Abdichtung zwischen dem Buchsenteil 2 und Stecker 3 ist bei dem gezeigten Ausführungsbeispiel in das Einsatzstück 15 verlegt. Damit soll der O-Ring 27 gegen äußere Einflüsse möglichst gut geschützt werden. Es besteht jedoch auch die Möglichkeit den O-Ring 27 auf die äußere Zylinderfläche 12 zu verlegen und ihn gegen eine entsprechende Fläche in der Grundkörperhülse 31 abzudichten. In einem solchen Falle kann auch das Einsatzstück 15 entfallen, indem beispielsweise die innere Rippe 14 so gestaltet wird, dass sie an das Stirnende des Gewindestutzens 7 abdichten kann.

Eine weitere Möglichkeit besteht darin, den vorderen Teil des Einsatzstückes 15, der die Nut 25 enthält, gleichsam mit dem Grundkörper 4 einstückig auszuführen und die dann mit dem Grundkörper 4 einstückige Schulterfläche am rechten Ende des "Flansches 21" als Dichtfläche zu verwenden. Der Flansch 21 wäre bei einer einstückigen Ausführung kein getrenntes Bauteil mehr. Vielmehr ist der Flansch 21 in dem Grundkörper 4 verschwunden.

Ein kurzbauender Stecker für Fluidkupplungen besteht aus einem hülsenförmigen Grundkörper. In dem hülsenförmigen Grundkörper befindet sich ein Innengewinde, mit dem der Stecker auf einen Gewindeanschluss aufschraubbar ist. Bezogen auf die axiale Erstreckung befinden sich die Verriegelungsnut und Verrieglungsrippe, die zum Halten des Steckers in dem Buchsenteil dienen, auf der Höhe des Gewindes. Mit anderen Worten, die Verrieglungsrippe und Verriegelungsnut, die beim Stand der Technik vor dem Gewinde angeordnet sind, sind bei der erfindungsgemäßen Anordnung in den Bereich des Gewindes gewandert.

## Patentansprüche

1. Fluidkupplung mit einer bewegliche Verriegelungsmittel (33) aufweisenden Buchse (22) und einer kurzbauenden, einen hülsenförmigen Grundkörper (4) aufweisenden Steckeranordnung (3), wobei der Grundkörper (4) ein Innengewinde (5) zum Aufschrauben auf einen Gewindestutzen (7) enthält und auf seiner Außenseite mit Verriegelungsmitteln (9, 11) versehen ist, die zum Zusammenwirken mit den Verriegelungsmitteln (33) der Buchse (2) vorgesehen sind, **dadurch gekennzeichnet, dass** die an dem Grundkörper (4) angeordneten verriegeiungsmittei (9, 11) bezogen auf die axiale Erstreckung des Grundkörpers (4) auf der Höhe des Innengewindes (5) und in radialer Richtung nebeneinander mit dem Innengewinde (5) angeordnet sind, und dass der Grundkörper (4) in seinem Inneren ein rohrförmiges Einsatzstück (15) aufweist und an/in dem Einsatzstück (15) Dichtungsmittel (27) zum Abdichten gegen die Buchse (2) angeordnet sind.

2. Fluidkupplung nach Anspruch 1, **dadurch gekennzeichnet, dass** das Einsatzstück (15) mit einer Dichtfläche (23) zum Abdichten gegen den Gewindestutzen (7) versehen ist.

3. Fluidkupplung nach Anspruch 2, **dadurch gekennzeichnet, dass** die Dichtfläche (23) kugelkalottenförmig ist.

4. Fluidkupplung nach Anspruch 1,**dadurch gekennzeichnet, dass** das Einsatzstück (15) mit einem radial nach außen stehenden Flansch (21) versehen ist.

5. Fluidkupplung nach Anspruch 4, **dadurch gekennzeichnet, dass** der Grundkörper (4) mit einer radial nach innen stehenden Rippe (14) zum Zusammenwirken mit dem Flansch (21) des Einsatzstücks (15) versehen ist.

6. Fluidkupplung nach Anspruch 4, **dadurch gekennzeichnet, dass** das Einsatzstück (15) im Abstand zu dem Flansch (21) eine Sprengringnut (18) enthält.

7. Fluidkupplung nach Anspruch 1, **dadurch gekennzeichnet, dass** die Dichtungsmittel (27) einen O-Ring umfassen.

8. Fluidkupplung nach Anspruch 7, **dadurch gekennzeichnet, dass** der O-Ring (27) in einer Außenumfangsnut sitzt.

9. Fluidkupplung nach Anspruch 7, **dadurch gekennzeichnet, dass** der O-Ring (27) in einer Innenumfangsnut (25) sitzt.

10. Fluidkupplung nach einem der Ansprüche 1 bis 9, **dadurch gekennzeichnet, dass** zumindest der Grundkörper (4) rotations-symmetrisch ist.

11. Fluidkupplung nach einem der Ansprüche 1 bis 10, **dadurch gekennzeichnet, dass** die Verriegelungsmittel (9, 11) von einer auf der Außenseite des Grundkörpers (4) vorgesehenen umlaufenden Rippe (11) oder einer in der Außenseite des Grundkörpers (4) umlaufenden Nut (9) oder einer Kombination aus beidem gebildet sind.

## Claims

1. A fluid coupling comprising a socket (22) having movable locking means (33) and a short plug arrangement (3) having a sleeve-shaped main body (4), wherein the main body (4) has a female screwthread (5) for screwing on to a threaded connecting portion (7) and is provided on its outside with locking means (9, 11) provided for co-operating with the locking means (33) of the socket (2), **characterised in that** the locking means (9, 11) arranged on the main body (4) are disposed in relation to the axial extent of the main body (4) at the level of the female screwthread (5) and in mutually juxtaposed relationship in the radial direction with the female screwthread (5), and the main body (4) in its interior has a tubular insert portion (15) and sealing means (27) are arranged on/in the insert portion (15) for sealing in relation to the socket (2).

2. A fluid coupling according to claim 1 **characterised in that** the insert portion (15) is provided with a sealing surface (23) for sealing in relation to the threaded connecting portion (7).

3. A fluid coupling according to claim 2 **characterised in that** the sealing surface (23) is in the shape of a spherical segment.

4. A fluid coupling according to claim 1 **characterised in that** the insert portion (15) is provided with a radially outwardly projecting flange (21).

5. A fluid coupling according to claim 4 **characterised in that** the main body (4) is provided with a radially inwardly projecting rib (14) for co-operating with the flange (21) of the insert portion (15).

6. A fluid coupling according to claim 4 **characterised in that** the insert portion (15) includes a circlip groove (18) at a spacing relative to the flange (21).

7. A fluid coupling according to claim 1 **characterised in that** the sealing means (27) include an O-ring.

8. A fluid coupling according to claim 7 **characterised in that** the O-ring (27) sits in an external peripheral groove.

9. A fluid coupling according to claim 7 **characterised in that** the O-ring (27) sits in an internal peripheral groove (25).

10. A fluid coupling according to one of claims 1 to 9 **characterised in that** at least the main body (4) is rotationally symmetrical.

11. A fluid coupling according to one of claims 1 to 10 **characterised in that** the locking means (9, 11) are formed by a peripherally extending rib (11) provided on the outside of the main body (4) or a peripherally extending groove (9) in the outside of the main body (4) or a combination of both.

## Revendications

1. Couplage hydraulique avec une douille (22) présentant des moyens de verrouillage mobiles (33) et un ensemble à fiches (3) de construction courte, présentant un corps de base (4) en forme de manchon, le corps de base (4) contenant un filetage intérieur (5) pour le vissage sur une tubulure filetée (7) et étant pourvu sur son côté extérieur de moyens de verrouillage (9, 11) prévus pour coagir avec les moyens de verrouillage (33) de la douille (2), **caractérisé en ce que** les moyens de verrouillage (9, 11) disposés sur le corps de base (4) sont disposés, par rapport à l'étendue axiale du corps de base (4), à la hauteur du filetage intérieur (5) et dans la direction radiale les uns à côté des autres avec le filetage intérieur (5), et **en ce que** le corps de base (4) présente en son intérieur un insert tubulaire (15) et des moyens d'étanchéité (27) sont disposés sur/dans l'insert (15) pour rendre étanche contre la douille (2).

2. Couplage hydraulique selon la revendication 1, **caractérisé en ce que** l'insert (15) est pourvu d'une surface étanche (23) pour rendre étanche contre la tubulure filetée (7).

3. Couplage hydraulique selon la revendication 2, **caractérisé en ce que** la surface étanche (23) présente une forme de calotte sphérique.

4. Couplage hydraulique selon la revendication 1, **caractérisé en ce que** l'insert (15) est pourvu d'une bride (21) se trouvant radialement vers l'extérieur.

5. Couplage hydraulique selon la revendication 4, **caractérisé en ce que** le corps de base (4) est pourvu d'une nervure (14) se trouvant radialement à l'intérieur pour coagir avec la bride (21) de l'insert (15).

6. Couplage hydraulique selon la revendication 4, **caractérisé en ce que** l'insert (15) contient une rainure pour agrafe (18) à distance de la bride (21).

7. Couplage hydraulique selon la revendication 1, **caractérisé en ce que** les moyens d'étanchéité (27) comportent un joint torique.

8. Couplage hydraulique selon la revendication 7, **caractérisé en ce que** le joint torique (27) loge dans une rainure périphérique extérieure.

9. Couplage hydraulique selon la revendication 7, **caractérisé en ce que** le joint torique (27) loge dans une rainure périphérique intérieure (25).

10. Couplage hydraulique selon l'une quelconque des revendications 1 à 9, **caractérisé en ce qu'**au moins le corps de base (4) est symétrique en rotation.

11. Couplage hydraulique selon l'une quelconque des revendications 1 à 10, **caractérisé en ce que** les moyens de verrouillage (9, 11) sont formés par une nervure (11) périphérique prévue sur le côté extérieur du corps de base (4) ou une rainure (9) périphérique dans le côté extérieur du corps de base (4) ou une combinaison de celles-ci.
